(19)

**Europäisches Patentamt**

**European Patent Office**

**Office européen des brevets**

(11) **EP 3 629 515 B1**

(12) **EUROPEAN PATENT SPECIFICATION**

(45) Date of publication and mention
of the grant of the patent:
**20.10.2021 Bulletin 2021/42**

(51) Int Cl.:
*H04L 9/08* (2006.01)          *H04L 9/32* (2006.01)

(21) Application number: **18197685.3**

(22) Date of filing: **28.09.2018**

(54) **SECURE COMMUNICATION IN A WIRELESS NETWORK**

SICHERE KOMMUNIKATION IN EINEM DRAHTLOSEN NETZWERK

COMMUNICATION SÉCURISÉE DANS UN RÉSEAU SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.04.2020 Bulletin 2020/14**

(73) Proprietor: **Nokia Technologies Oy
02610 Espoo (FI)**

(72) Inventors:
• **DUBUS, Samuel
75014 PARIS (FR)**
• **ROSE, Luca
91400 ORSAY (FR)**
• **JARDEL, Fanny
91290 ARPAJON (FR)**

(74) Representative: **Laine IP Oy
Porkkalankatu 24
00180 Helsinki (FI)**

(56) References cited:
**US-A1- 2014 219 449**

• **LIU YILIANG ET AL: "Physical Layer Security for
Next Generation Wireless Networks: Theories,
Technologies, and Challenges", IEEE
COMMUNICATIONS SURVEYS & TUTORIALS,
vol. 19, no. 1, 10 August 2016 (2016-08-10), pages
347-376, XP011641661, DOI:
10.1109/COMST.2016.2598968 [retrieved on
2017-02-22]**
• **ANKARALI ZESAT ET AL: "Channel independent
physical layer security", 2016 IEEE 17TH
ANNUAL WIRELESS AND MICROWAVE
TECHNOLOGY CONFERENCE (WAMICON),
IEEE, 11 April 2016 (2016-04-11), pages 1-5,
XP032907384, DOI:
10.1109/WAMICON.2016.7483858 [retrieved on
2016-06-01]**

**Description**

FIELD

Various embodiments relate in general to wireless networks. More specifically, embodiments relate to securing communication in such networks.

BACKGROUND

Modern cryptography may be divided into two schools, comprising information-theoretic and complexity-based security. Traditionally, only complexity-based security has been used while the use of information-theoretic cryptography has been limited, if any. Information-theoretic cryptography is based on insufficiency of information and hence it does not depend on computational hardness. In other words, information-theoretic cryptography may ensure secure communication, even if unlimited computing power would be available. Information-theoretic cryptography may be considered as unbreakable from the cryptanalytic point of view, because typically there is not enough information for an adversary to break the encryption. The use of information-theoretic cryptography is therefore desirable in many applications.

Physical-Layer Security, PLS, may be seen as one of form information-theoretic cryptography, which may be used to complement and improve security of communications in wireless networks. Using PLS, intrinsic randomness of a transmission channel, i.e. uniqueness of the channel between two physical positions in space and time, may be exploited to guarantee security communications.

More recently, a need to design new and robust security protocols based on PLS has arisen, because application level security may not be efficient and secure enough for emerging wireless communication systems. PLS may be used as an additional level of protection on top of, or instead of, conventional security schemes. Thus, it would be desirable to exploit PLS to form a well-integrated security solution for wireless communication networks.

There is therefore a need for providing improved methods, apparatuses and computer programs to enable secure communications in wireless networks by exploiting PLS.

US 2014/0219449 A1 discloses that a node in a first network requests a communication channel from a second network. Upon receiving a channel assignment, nodes in the first network employ the assigned channel for communicating in a manner that is transparent to the second network. A transmitting node selects a decoy data signal as a carrier signal, synthesizes data-bearing channel distortions; and distorts the carrier signal with the channel distortions prior to transmission. An undistorted version of the decoy data may be transmitted to an intended receiver.

LIU YILIANG ET AL: "Physical Layer Security for Next Generation Wireless Networks: Theories, Technologies, and Challenges", IEEE COMMUNICATIONS SURVEYS & TUTORIALS, vol. 19, no. 1, 10 August 2016 (2016-08-10), pages 347-376, XP011641661, DOI: 10.1109/COMST.2016.2598968.

SUMMARY OF THE INVENTION

According to some aspects, there is provided the subject-matter of the independent claims. Some embodiments are defined in the dependent claims.

According to a first aspect, there is provided a first method for a terminal, comprising receiving, by the terminal, at least a first encrypted part of a coded data message from a first network node and a second encrypted part of the coded data message from a second network node, decrypting, by the terminal, the first encrypted part of the coded data message using a first security key, wherein the first security key is generated based on a subset of a first channel matrix estimated by the terminal, decrypting, by the terminal, the second encrypted part of the coded data message using a second security key, wherein the second security key is generated based on a subset of a second channel matrix estimated by the terminal and compiling, by the terminal, the coded data message by combining at least the decrypted first part and the decrypted second part.

The first method may also comprise decoding the compiled coded data message.

In addition, or alternatively, the first method may comprise receiving $N$ encrypted parts of the coded data message from $N$ network nodes, decrypting the $N$ encrypted parts of the coded data message using $N$ security keys, wherein each of the $N$ security keys is generated based on a channel matrix between one network node of the $N$ network nodes and the terminal and compiling the coded data message by combining the $N$ decrypted parts.

According to the first method, an entry in a subset of a channel matrix may comprise a number of most significant bits of an entry of the channel matrix.

Also, according to the first method a subset of a channel matrix may comprise information related to a number of antenna pairs and the number of antenna pairs in the subset of the channel matrix is less than a number of antenna pairs in the channel matrix.

In some embodiments, the first method may also comprise estimating the first channel matrix based on a message from the first network node and generating the first security key based on the subset of the first channel matrix and estimating the second channel matrix based on a message from the second network node and generating the second security key based on the subset of the second channel matrix.

In some embodiments, the first method may also comprise splitting a coded uplink data message to at least a first and a second part, encrypting the first part using the first security key and the second part using the second security key and transmitting at least the encrypted first part to the first network node and the encrypted second part to the second network node.

In some embodiments, the first method may also comprise transmitting a test message for testing the first security key and receiving an acknowledgement message regarding the test message.

According to a second aspect of the present invention, there is provided an apparatus comprising means for performing the first method. The apparatus may comprise means for receiving at least a first encrypted part of a coded data message from a first network node and a second encrypted part of the coded data message from a second network node, means for decrypting the first encrypted part of the coded data message using a first security key, wherein the first security key is generated based on a subset of a first channel matrix estimated by the terminal, means for decrypting the second encrypted part of the coded data message using a second security key, wherein the second security key is generated based on a subset of a second channel matrix estimated by the terminal and means for compiling the coded data message by combining at least the decrypted first part and the decrypted second part

According to a third aspect of the present invention, there is provided a computer program configured to perform the first method.

BRIEF DESCRIPTION OF THE DRAWINGS

FIGURE 1 illustrates a network scenario in accordance with at least some embodiments of the present invention;

FIGURE 2 illustrates a process and signalling in accordance with at least some embodiments of the present invention;

FIGURE 3 illustrates an example apparatus capable of supporting at least some embodiments of the present invention;

FIGURE 4 illustrates a flow graph of a first method in accordance with at least some embodiments of the present invention; and

FIGURE 5 illustrates a flow graph of a second method in accordance with at least some embodiments of the present invention.

EMBODIMENTS

Security of wireless communication networks may be improved by the procedures described herein. In more detail, a data message may be encoded and divided into N parts. Moreover, each part of the encoded data message may be transmitted to one base station of N base stations. Each base station may consequently encrypt the received part of the encoded data message using a security key, which may be based on a channel matrix estimated by the base station in question, and transmit the encrypted part of the encoded data message to a terminal. Upon reception, the terminal may decrypt each part of the encoded data message using a security key, which may be based on a channel matrix associated with the base station in question, wherein the channel matrix may be estimated by the terminal. Finally, the terminal may compile the coded data message using the decrypted N parts of the coded data message and decode the compiled data message.

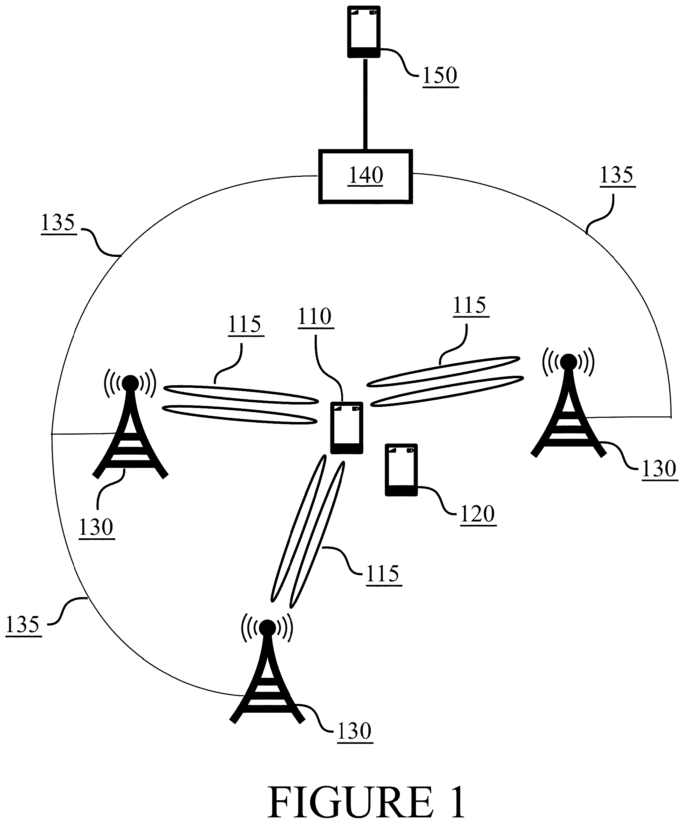

FIGURE 1 illustrates an example system in accordance with at least some embodiments of the present invention. User Equipment, UE, 110, 120 and 150 may comprise, for example, a smartphone, a cellular phone, a Machine-to-Machine, M2M, node, machine-type communications node, an Internet of Things, IoT, node, a car telemetry unit, a laptop computer, a tablet computer or, indeed, another kind of suitable user device or mobile station, i.e., a terminal. In the example system of FIGURE 1, UEs 110 may be attached to a cell of Base Stations, BSs, 130 for wireless communications. BSs 130 may be considered as a serving BSs for UEs 110. Air interface 115 between UE 110 and BSs 130 may be configured in accordance with a Radio Access Technology, RAT, which both UE 110 and BSs 130 are configured to support. Air interface 115 may comprise one or more beams between UE 110 and each BS 130.

Examples of cellular RATs include Long Term Evolution, LTE, New Radio, NR, which is also known as fifth generation, 5G, and MulteFire. On the other hand, examples of non-cellular RATs include Wireless Local Area Network, WLAN, and Worldwide Interoperability for Microwave Access, WiMAX. Principles of the present disclosure are not limited to a specific RAT though. For example, in the context of LTE, BS 130 may be referred to as eNB while in the context NR, BS 130 may be referred to as gNB. Also, for example in the context of WLAN, BS 130 may be referred to as an access point. In general, BS 130 may be referred to as a wireless network node. UEs 110 and 120 may be similarly referred to as wireless terminals in general. In any case, the present invention is not restricted to any particular wireless technology, but it may be exploited in any wireless system comprising multiple network nodes for communication with a terminal.

BS 130 may be connected, directly or via at least one intermediate node, with core network 140. BS 130 may be connected to core network 140 via wired connections 135. Core network 140 may be, in turn, coupled with another network (not shown in FIGURE 1), via which connectivity to further networks may be obtained, for example via a worldwide interconnection network. BS 130 may be connected with at least one other BS as well via an inter-base station interface (not shown in FIGURE 1), even though in some embodiments the inter-base station interface may be absent. BS 140 may be connected, directly or via at least one intermediate node, with core network 150 or with another core network.

The example system of FIGURE 1 may comprise third UE 150, or terminal in general, which may transmit messages to UE 110 or receive messages from UE 110 via at least one BS 130, and possibly via core network 140 as well. Messages may be transmitted or received via at least one BS 130 directly as well, without going through core network 140. In some embodiments of the present invention, UE 150 may be referred to as a sender of a message, i.e., Bob. Also, in some embodiments of the present invention UE 110 may be referred to as a legitimate receiver of the message, i.e., Alice. In addition, in some embodiments of the present invention UE 120 may be referred to as a potential eavesdropper, i.e., Eve.

One challenge addressed by the present invention is that security protocols implemented at higher levels of a wireless communication network are vulnerable to interception attacks, also known as man-in-the-middle attacks. Even though Physical Layer Security, PLS, may not be totally resilient to such attacks, PLS may be exploited to ensure secrecy of a wireless transmission because keys that are used for encryption/decryption are not distributed.

Moreover, symmetric-key cryptosystems may be computationally efficient but typically such solutions increase delays and decrease throughput. On the other hand, algorithms which are based on public-keys may be computationally expensive and energy-consuming, which is a problem especially for wireless terminals with limited resources. Such algorithms may also incur delay and decrease throughput. Thus, PLS may be used, possibly together with other security solutions, to overcome the above mentioned challenges.

High data rates may be achieved using high frequency bands, because typically there is more bandwidth available on higher frequency bands. For example, frequency bands between 30 and 300 GHz may be used. Such frequency bands may be referred to as millimetre-wave frequency bands. For example, 3rd Generation Partnership Project, 3GPP, develops 5G technology and considers the use of millimetre-wave frequency bands for it. Future radio communication systems may use even higher frequency bands. Furthermore, it is anticipated that beamforming will be often, if not always, used on millimetre-wave frequency bands and above to improve the performance of the radio communication system.

Some embodiments of the present invention provide a secret key establishment scheme, which may exploit uniqueness of a wireless channel between two nodes, such as, for example, interference and time-varying nature of wireless channels for generating security keys for secure communication. In addition, in some embodiments of the present invention secrecy of wireless communication may be guaranteed based on established secret conventions, i.e., a key. In some embodiments of the present invention ultra-narrow beams may be exploited to provide means for securing communication.

Referring to FIGURE 1, according to some embodiments of the present invention, encryption and decryption keys may be established by utilizing uniqueness of a wireless channel between UE 110, i.e., Alice, and BSs 130. Encryption and decryption keys may be referred to as security keys in general. Security keys may be generated based on the channel between UE 110 and 130. As an example, Alice and Bob, i.e., UE 150, may want to perform secure communication via a wireless network, wherein Alice may receive parts of a data message from N BSs in her neighbourhood/vicinity. Embodiments of the present invention may provide secure communication using a distributed code to split the data message so that it may be transmitted/received via multiple BSs. That is to say, each BS may transmit/receive only a part of the data message. As an example, diversity-deficient Low Density Parity Check, LDPC, may be used for encoding the data message before splitting it. Also, channel matrices estimated by Alice and each BSs individually may be exploited. Alice and each BS may hence individually generate security keys based on the estimated channel matrices, preferably based on subsets of the channel matrices. Possibly, ultra-narrow beams may be used to improve security as well.

With reference to FIGURE 1 again, even though three BSs 130 are shown in FIGURE 1, a different number of BSs is also possible. For example, in some embodiments there may be only two BSs communicating with Alice. Moreover, a larger number of BSs may be considered as well, e.g., depending on security-sensitivity of the application. In general, embodiments of the present invention may provide better protection when a larger number of base stations is used.

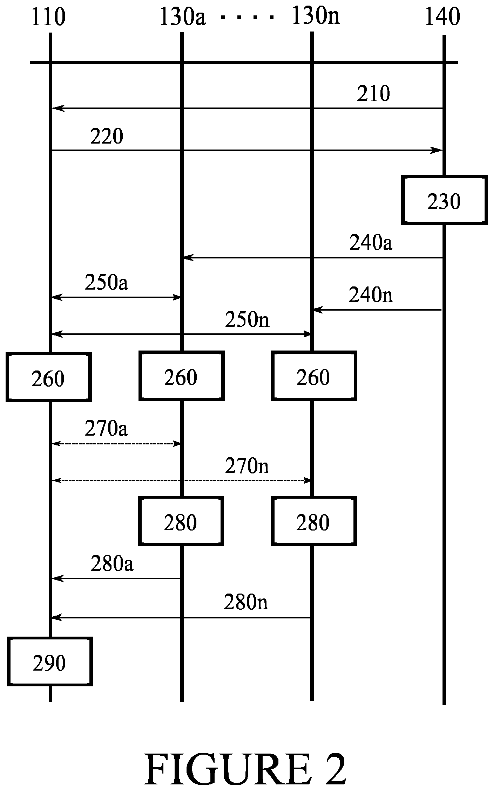

FIGURE 2 illustrates a process and signalling in accordance with at least some embodiments of the present invention. With reference to FIGURE 1, FIGURE 2 demonstrates signalling between UE 110, BSs 130a to 130n and a central controller, which may be located in core network 140. Thus, there are N base stations in the example of FIGURE 2. FIGURE 2 shows the signalling for transmission of downlink data but similar signalling may be applied for transmission of uplink data as well. Also, FIGURE 2 demonstrates the process for two BSs 130a and 130n but if there are more than two base stations, UE may also perform the described process together with other BSs.

As a first, optional step 210, the central controller may transmit a control message to UE 110, to inform UE 110 that it will receive a protected data message in downlink. Some extra information may be embedded into the control message. The control message is for informing UE 110 that a data message is about to be sent using a secure process for communication. In response, UE 110 may transmit, at step 220, a response message to the central controller to confirm reception of the control message. The response message may indicate to the central controlled that UE 110 is ready for starting the process related to secure transmission of a data message. Both, the control message and the response message, may be transmitted via one or more BSs 130a to 130n.

In some embodiments, hello or polling protocols may be used for checking that no protected message is waiting for an uplink transmission. That is to say, hello or polling protocols may be used to find out if a message to be protected is waiting in a queue. In some embodiments, if a hello or polling protocol is used, the process may proceed to step 230 upon determining that a message to be protected is waiting in a queue.

At step 230, the data message may be coded at the central controller for transmission to create, or generate, a coded message. The data message may be coded upon receiving the response message from UE 110, if optional steps 210 and 220 are performed. As an example, the data message may be coded using an anti-root LDPC at the central controller. Moreover, the coded message may be split into N parts.

Anti-root LDPC codes, which may be used at step 230, may be based on an anti-diversity concept, which may be used to secure communication on a two-link compound channel. In some embodiments, the following diversity rules may be exploited

1. The coding rate $R$ may satisfy $R \leq 1/2$.

2. The parity-check matrix of the code may be divided into two equal size submatrices, $M = [M1|M2]$. For example, in case of Maximum-Likelihood decoding, $M1$ and $M2$ may have full rank.

3. In case of iterative message-passing decoding, information bits may be connected to root checknodes of order one or higher.

In some embodiments of the present invention, the anti-diversity concept may refer to a code design, wherein the three diversity rules mentioned above are intentionally violated. For example, an anti-diversity of $L$, may mean that it would be impossible to reconstruct a data message with any given set of $L-1$ parts of the $N$ parts of the data message. Therefore, in some embodiments of the present invention it may be ensured that if Eve, i.e., UE 120 in FIGURE 1, would able to receive and decrypt $L-1$ parts of the $N$ parts of the data message, Eve still would not be able to reconstruct the entire coded data message. Parameter $L$ may be defined by code parameters in general, depending on a required security level of an application in question, or even for a certain data message individually. The code parameters may be communicated beforehand between Alice, BS and/or the controller for coding/decoding.

According to some embodiments of the present invention, the $N$ parts of the coded data message may be distributed among the $N$ base stations. The $N$ parts of the coded data message may compose the coded data message. Upon performing step 230, each coded part of the data message may be sent to a different base station involved in the communication with Alice. Thus, at step 240a, the central controller transmits the first part of the coded data message to the first BS 130a. Similarly, at step 240N, the central controller transmits the $Nth$ part of the coded data message to the $Nth$ BS 130n. Consequently, each of the BSs 130a to 130n may receive a part of the coded data message and the received parts may, possibly, be different so that different BSs do not receive the same part.

Then, the process may proceed to further improve security of a wireless transmission. Upon reception of the first part of the coded data message, at step 240a, BS 130 may start a channel estimation procedure to estimate a wireless channel between Alice and BSs 130a. More specifically, BSs 130a may estimate the wireless channel from UE 110 to BS 130a independently, i.e., without considering the wireless channel from BS 130a to UE 110. The channel estimation procedure may be performed upon reception of the first part of the coded data message, at step 240a, to be able to estimate an instantaneous Channel State Information, CSI. Similarly, BS 130n may initiate a channel estimation procedure to estimate a wireless channel between UE 110 and BS 130n, i.e., the wireless channel from UE 110 to BS 130n, upon reception of $Nth$ part of the coded data message at step 240n.

The channel estimation procedure may comprise transmitting by BS 130a, at step 250a, a first message for channel estimation to UE 110. Also, UE 110 may transmit to BS 130a a second message for channel estimation message at step 250a. The second message may be a response to the first message. Similarly, BS 130n may transmit a third message for estimation to UE 110 at step 250n and in response, UE 110 may transmit to BS 130n a fourth message for estimation at step 250n. The first, second, third and fourth messages for estimation may be pilot signals, transmitted with known parameters. It should be noted that the messages for estimation should not comprise any information that may help UE 120, i.e., Eve to estimate a channel matrix between the UE and the base stations. That is to say, no feedback should be included to the messages.

At step 260, UE 110 may estimate the wireless channel from BS 130a to UE 110 at step 260 using the first message. UE 110 may also compute a corresponding channel matrix $\widehat{H_{UE\_a}}$ . Also, UE 110 may estimate the wireless channel from BS 130n to UE 110 at step 260 using the third message. UE 110 may also compute a corresponding channel matrix $\widehat{H_{UE\_N}}$ .

Similarly, at step 260, BSs 130a may estimate the wireless channel from UE 110 to BS 130a based on the second message and compute a corresponding channel matrix $\widehat{H_{BS\_a}}$ . Also, at step 260, BS 130n may estimate the wireless channel from UE 110 to BS 130n based on the fourth message and compute a corresponding channel matrix $\widehat{H_{BS\_N}}$ . In some embodiments, multiple messages may be transmitted for channel estimation, i.e., multiple first, second, third and fourth messages may be transmitted to improve accuracy of channel estimation.

Thus, a first encryption key, i.e., first security key, to be used for secure communication between UE 110 and BS 130a may be derived, or generated, using the channel matrix $\widehat{H_{UE\_a}}$ at UE 110 while BS 130a may derive, or generate, the first encryption key using the channel matrix $\widehat{H_{BS\_a}}$ . Similarly, a second encryption key, i.e., second security key may be derived, or generated, by UE 110 using the channel matrix $\widehat{H_{UE\_N}}$ while BS 130n may derive, or generate, the second encryption key using the channel matrix $\widehat{H_{BS\_N}}$ . The first and the second encryption keys, i.e., security keys, may be generated using a subset of the channel matrices.

In general, in a narrowband flat-fading channel with multiple transmit and receive antennas, i.e. Multiple-Input and Multiple-Output, MIMO, a system may be modeled as

$$y = Hx + n, \qquad\qquad (1)$$

where $y$ and $x$ are the receive and transmit vectors, respectively, $n$ is the noise vector, and $H$ is the channel matrix of dimension $N_T \times N_R$, where $N_T$ is the number of transmit antennas and $N_R$ is the number of receive antennas. Dimension of the channel matrix $N_T \times N_R$ may refer to a number of antenna pairs. That is to say, each entry/element in the channel matrix may represent a channel associated with an antenna pair, e.g., between the $j$th transmit antenna and the $i$th receiver antenna.

As the channel conditions may vary, CSI may need to be estimated on a short-term basis, e.g., every 500 μs or 10 ms. One option for CSI estimation may be to use a pilot sequence approach, wherein a known signal may be transmitted and a channel matrix $\hat{H}$ may be estimated using combined knowledge of a transmitted and a received signal. Each BS-UE communication may be characterized by a different channel matrix $H$. In some embodiments of the present invention, it may be assumed that a channel matrix, or a subset of the channel matrix, from a BS to a UE may be estimated as the same a channel matrix, or a subset of the channel matrix, from the UE to the BS. Both, the UE and the BS, may estimate a channel matrix, or a subset of the channel matrix, independently.

The estimated channel matrices may be assumed as the same (with sufficient precision) by relying on reciprocity of wireless channels. Thus, it may be assumed that the channel matrices, or subsets of, $\widehat{H_{UE\_a}}$ and $\widehat{H_{BS\_a}}$ are the same, and the channel matrices, or subsets of, $\widehat{H_{UE\_N}}$ and $\widehat{H_{BS\_N}}$ are the same. Security keys may be therefore generated using the channel matrices, or subsets of the channel matrices. Hence, the security keys generated independently by the BS and the UE may be assumed as the same as well.

Each estimated matrix $\hat{H}$ may be composed of complex numbers, wherein each complex number represents a complex channel coefficient associated with an antenna pair, e.g., between the $j$th transmit antenna and the $i$th receiver antenna. The estimated channel matrix $\widehat{H_K}$ may be used for generating an encryption/decryption key, i.e., security key, between the $K$th BS and Alice. Typically, a channel matrix is strongly location-dependent, i.e., one needs to be in the exact position to observe the very same channel matrix.

A channel matrix is generally very difficult to predict while it may be rapidly time varying. In other words, in order to estimate the same channel matrix, Eve would need to be at the same position as Alice at the same time instant.

The estimated channel matrix $\widehat{H_K}$ may therefore be considered as a secret convention between Alice and the $K$th BS. Moreover, according to the embodiments of the present invention, it is possible to avoid exchanging information that is used for generating the security key, i.e., channel matrix $\widehat{H_K}$, over air interface, as the estimation is performed independently by Alice and the $K$th BS. Physical layer security may be offered without generating any overhead, because exchange of the encryption key is not needed, nor allowed.

In some embodiments of the present invention, it may be desirable to maximize the likelihood that the channel matrices $\widehat{H_{UE\_a}}$ and $\widehat{H_{BS\_a}}$ correspond to each other, to enable the use of the channel matrices independently as a symmetric encryption/decryption key, i.e, security key. Similarly, the channel matrices $\widehat{H_{UE\_N}}$ and $\widehat{H_{BS\_N}}$ should correspond to each other as well. Thus, according to some embodiments of the present invention only a certain number $B$ of the most significant bits of the $M$ most reliable estimations, i.e., a subset of the channel matrix, may be used for generating security keys, in order to reduce the likelihood of mismatch between the corresponding channel matrices. The $M$ most reliable estimations may be associated with $M$ antenna pairs, which may be selected for the subset of the channel matrix. In some embodiments, a number $M$ of antenna pairs in the subset of the antenna matrix is less than a number of antenna pairs of the channel matrix. As an example, a reliability of a measure may be expressed as an average power of a value between multiple successive estimations, if multiple messages are transmitted for channel estimation.

So a part, or a subset, of the channel matrices may be used as an encryption key, i.e., a security key, to ensure that the key is not too refined. An adequate number of bits may be used, as small differences in channel estimation results of the BS and the UE may lead to different encryption keys, i.e., the security keys generated by the BS and the UE would not match. This would diminish the possibility of correct decoding of data messages.

Gain of each channel between each antenna pair may be expressed with a complex value. A collection of all these complex values, associated with an antenna pair, e.g., between the $j$th transmit antenna and the ith receiver antenna, may be referred to as the channel matrix. For example, if a BS has 10 antenna elements and an UE has 2 antenna elements, the channel matrix between the BS and the UE may be composed of 10*2 complex values (entries of the channel matrix). These complex values may be quantized by using a certain number of bits, for example 8.

In some embodiments all of the complex values may not be used. Instead, a subset of the channel matrix may be used. For instance, complex values that are too small, i.e., below a threshold may be discarded. Alternatively, a certain number of smallest complex values may be discarded to derive a subset of the channel matrix. Furthermore, in some embodiments only a certain number of most significant bits may be used to represent one complex value. That is to say, $N$ less relevant bits associated with one complex value may be discarded. The remaining bits may be represent a subset of the channel matrix associated with a set of antenna pairs, because a subset of the set of antenna pairs may be used with limited accuracy for generation of security keys.

Thus, the likelihood that the BS and the UE may generate the same security key individually may be increased by reducing information related to the channel matrix that is used for generating the security key. As the BS and the UE may estimate the channel matrices and generate security keys independently, embodiments of the present invention may be exploited for ensuring that same bits are used for generating security keys at the BS and the UE by discarding less trustworthy bits of the estimated channel matrices.

As an example, the risk of having different keys may be high if Alice and the BS estimate the channel with a too high level of precision, which may lead to discrepancies between the channels matrices by Alice and the BS, which are used for generating a security key (considered as the encryption/decryption key). Thus, in some embodiments of the present invention, some negligible power elements may be removed from the channel matrices for deriving the security keys. This would lead to the use of a subset of channel matrices for encryption/decryption. For example, only a certain number of most significant bits of the estimation may be chosen to maximize the probability of using the same key for encryption/decryption.

In addition, or alternatively, the likelihood for using the same key for encryption/decryption by the BS and the UE may be increased by using information related to a limited number of antenna pairs (ith antenna at the transmitter and $j$th antenna at the receiver) for generating a security key. For example, a number of antenna pairs that show a sufficient or a highest level of power may be selected to the subset of the channel matrix, which may be used for generating the security key. The number of antenna pairs represented by the subset of the channel matrix may be hence less than a number of antenna pairs represented by the channel matrix, i.e., the subset comprises less entries than the channel matrix.

For example, according to 5G/NR standard it may be possible for the BS to support at least 512 antennas while the UE may support at least 4 antennas. Thus, there would be 4096 elements/entries in the channel matrix but if 4 antenna pairs (e.g. strongest pairs) would be selected to be used for generating the security key, the number of elements/entries would be reduced to 4, which would improve probability of using the same key by the BS and the UE. The probability may be further increased by using a limited number of bits to represent each entry in channel matrices.

It may be noted that a channel matrix should not be too long, i.e., the channel matrix should not comprise too many entries for a given number of bits that are used for generation of a security key.. Otherwise, if the amount of bits that are used for generating a security key is limited, as it typically is, a long channel matrix would require reduction of accuracy of the estimation, i.e., complex values representing antenna pairs, for generating the security key. This would reduce the strength of the security key, thereby possibly making it possible for Eve to guess parts of the security key.

In some embodiments also a validation mechanism may be used. The validation step may be optional and comprise, for example, a transmission of a test message and a corresponding acknowledgement/non-acknowledgement, ACK/NACK, procedure. With reference to FIGURE 2 again, at step 270a BS 130a may transmit a test message using the first security determined at BS 130a, which is based on the channel matrix between BS 130a and UE 110, estimated by BS 130a. For example, the test message may be encrypted using the first security key, which may be based on a subset of the channel matrix between BS 130a and UE 110. If UE 110 can decrypt the test message correctly using the first security key determined at UE 110, which may be based on a subset of the channel matrix between UE 110 and BS 130a, estimated at UE 110, UE 110 may respond with a positive acknowledgement, ACK, at step 270a.

If UE 110 cannot decrypt the test message correctly using the first security key determined at UE 110, it may respond with a negative acknowledgement, NACK. In this case both, UE and BS 130a, may need to perform channel estimation again, i.e., continue the process from step 250a. The second security key between UE and BS 130n may be validated similarly at step 270n.

At step 280, BS 130a may encrypt the first part of the coded data message, received from the controller at step 240a, using the first security key, which may be generated by BS 130a based on a subset of the estimated channel matrix $\widehat{H_{BS\_a}}$. Similarly, BS 130n may encrypt the second part of the coded data message, received from the controller at step 240n, using the second security key, which may be generated by BS 130n based on a subset of the estimated channel matrix $\widehat{H_{BS\_N}}$. Finally, BS 130a may transmit the encrypted first part of the coded data message to UE 110 at step 280a and BS 130n may transmit the encrypted second part of the coded data message to UE 110.

Each BS may transmit the encrypted part of the coded message using a strong conventional stream ciphering, or a block cipher with an appropriate cipher mode of operation. A symmetric encryption algorithm, such as Advanced Encryption Standard, AES, may be used with a key length of 128, 256 or 384, and Counter, CTR, or Galois counter mode, GCM, as the cipher mode of operation, using an encryption key derived from the estimated channel matrix of the BS in question.

In addition, or alternatively, BS 130a and BS 130n may transmit the encrypted first and second parts of the coded data message, respectively, to UE 110 using ultra-narrow beams. Ultra-narrow beams provide an extra level of security. The BS may use beamforming/precoding to direct a transmission, i.e., a power of the transmission, around a neighborhood of UE 110. An attacker would therefore need to be very close to UE 110 in order to eavesdrop all the transmissions coming from N base stations.

For example, BS 130a and BS 130n may use a first beamwidth for beamformed transmissions during normal operation. Then, upon recognizing a need for secure communication, BS 130a and BS 130n may use a second beamwidth for transmissions of encrypted first and second parts of the coded data message, respectively. The second beamwidth may be narrower than the first beamwidth.

UE 110 may, at step 290, decrypt the first encrypted part of the coded data message, received from BS 130a, using the first security key. UE 110 may also decrypt the second encrypted part of the coded data message, received from BS 130n, using the second security key. After that, UE 110 may compile the coded data message by combining at least the decrypted first part and the decrypted second part. UE 110 may decode the compiled coded data message, at step 290, as well.

Embodiments of the present invention provide a secure way to communicate over air interface. Eve should be very close to Alice to be able hack the encrypted data message and in that case Eve would be easily detectable. Furthermore, it is noted that if the encrypted data message could be transmitted/received via an infinite number of antennas, Eve should be at the exact same position as Alice.

Moreover, it would be challenging for Eve to hack the encrypted data message transmitted over air interface because Eve would need to listen to all base stations since the data message is distributed/split among all the base stations involved in the wireless communication with Alice. A diversity-deficient coding scheme, such as LDPC, may be used so even if Eve would guess the encryption key between Alice and one BS, it would not be enough for decoding the message. Multipoint wireless communications, wherein a different encryption key is used for transmitting a part of the message, offer improved security because Eve should guess the channel matrices between a UE and all the BSs.

Even if Eve would figure out a statistical characterization of the channel (a statistical CSI of a channel), it would not lead to an instantaneous CSI which is used in some embodiments of the present invention for establishing encryption keys.

It may be noted that it would be very costly in terms of material and man power to guess a correct encryption key out considering a size of the key space, because the number of possible channel matrices and complex numbers therein, may become extremely large in various wireless communication networks. For example, a BS operating according to 5G/NR standards may support at least 512 antennas while a UE may support at least 4 antennas. Therefore, there are 512*4 complex numbers in a channel matrix to be guessed, i.e., 512*4*2 elements/entries of the channel matrix. So considering a scenario where $N$ base stations are sending $N$ parts of the message to Alice, there are 512*4*2*N elements/entries to be guessed. As an example, elements/entries may be quantified with 4 bits, i.e., the number of bits used for generating a security key may be 4 bits, which would lead to $2^4$*512*4*2*N possibilities. On top of that, in some embodiments the size of the channel matrix may be reduced for generating the security key, i.e., a subset of the channel matrix may be used.

Referring to FIGURE 2 again, according to some embodiments of the present invention an authentication step may be performed before step 210. In mobile communication networks, authentication may refer to a process of determining whether a user is an authorized subscriber of a network that the user is trying to access. Various authentication procedures are available. As an example, Evolved Packet System Authentication and Key Agreement, EPS-AKA, procedure is used in LTE network for mutual authentication between the user and the network. A similar, most likely stronger, authentication procedure may be used for 5G/NR. In such schemes, an authentication key may not be shared through a wireless channel. Instead the authentication key may be derived from a SIM card of a terminal, i.e., a UE. The authentication step may be performed to ensure BSs 130a to 130n will send the parts of the coded message to Alice, instead of Eve.

Moreover, even if Eve would be able to circumvent the authentication procedure and perform a man-in-the-middle attack, Eve should be able to intercept all of the $N$ parts of the coded data message, which are transmitted from $N$ BSs. Thus, Eve would need to perform $N$ different man-in-the-middle attack, which would be laborious and complex. In practice, Eve should therefore be able to figure out International Mobile Subscriber Identity, IMSI, and a secret parameter $K$ of a Subscriber Identity Module, SIM, to impersonate Alice. This would further require, e.g., a shutdown of Alice or a Denial-of Service, DoS, attack because otherwise the network would notice two devices using the same parameters.

Embodiments of the present invention may also be exploited for centimeter-wave communications, wherein for example MIMO technology may be used. In such a case, multipath propagation may be exploited due to scattering of transmitted signals. The present invention is not therefore limited to millimeter-wave frequency bands and may be utilized on other frequency bands as well.

In addition, an UE may also use embodiments of the present invention when sending an uplink data message to the base stations. For example, the UE may code the uplink data message and split the coded data message into N parts. Moreover, the UE may perform estimation of channel matrices similarly as in the embodiment of FIGURE 2, encrypt the parts of the coded message accordingly and transmit the encrypted N parts to different base stations. The UE sending the uplink data may be referred to as Alice or Bob.

Embodiments of the present invention may also be used in the context of IoT. Security has become an important issue for IoT devices recently due to numerous attacks, e.g., against networked cars or medical devices. Typically, IoT devices transmit only a few packets and hence Eve would not have time to compute a location of Alice. Moreover, traditional authentication methods, e.g., EPS-AKA, may not be suitable for IoT, if some IoT devices would be operating without SIM cards. For example, SIM cards may be too expensive for certain low-cost IoT devices or the devices may not have sufficient resources for pre-coding. The present invention would hence enable the operation of such IoT devices. In general, the present invention would enable secure communication for devices which cannot perform authentication at higher levels for any reason.

Therefore, it may be summarized that in order to decrypt and decode the transmitted message, Eve should be able to guess the encryption keys between all (or at least L) base stations and Alice, which are based on the estimated channel matrices. Moreover, Eve should be quite close to Alice because if Eve is not in the close to Alice, Eve would not be able to manage advance rate adapting to be at the same power than Alice. Referring to the anti-diversity concept, Eve should be able to intercept all of the $N$ packets sent by the $N$ base stations as well, to be able to decode the entire transmitted message. It should be also noted that even if Eve would possess all the parts of the transmitted data message, all the encryption keys may be needed to decrypt it.

Embodiments of the present invention enable tailoring a security level depending on the requirements of an application. For example, if high security level is needed, the number of antenna pairs of a channel matrix considered for an encryption key may be increased. This would lead to, e.g., more CSI parameters, which may mean that more bits are considered for encryption keys.

Also, the anti-diversity parameter of the anti-root LDPC code may be increased to achieve better protection of the message before transmitting it. This would increase complexity of possible man-in-the-middle attacks and interceptions of the various parts of the message.

The present invention is therefore suitable for IoT devices. Furthermore, the present invention may be used together with conventional cryptographic techniques for an extra layer of security. Conventional cryptographic techniques may comprise point to point encryption, e.g., Hypertext Transfer Protocol Secure, HTTPS, or Internet Protocol Security, IPSec.

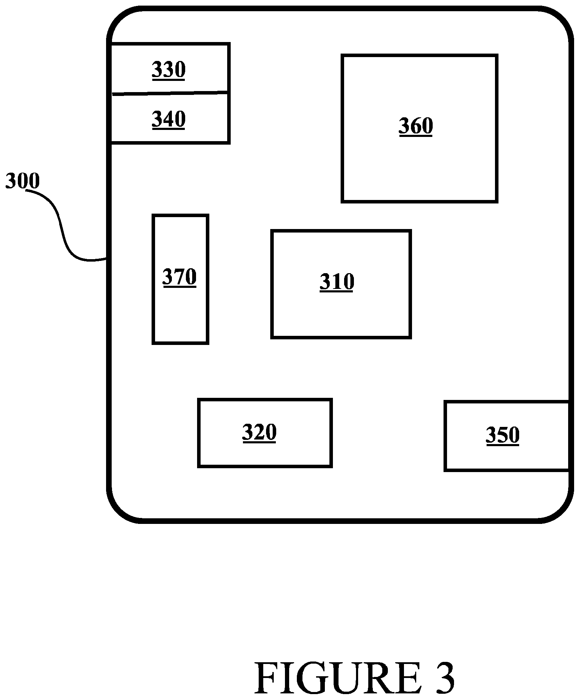

FIGURE 3 illustrates an example apparatus capable of supporting at least some embodiments of the present invention. Illustrated is device 300, which may comprise, for example, UE 110, such as, a mobile communication device, first network element 130 of FIGURE 1 or FIGURE 2. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Steamroller processing core produced by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

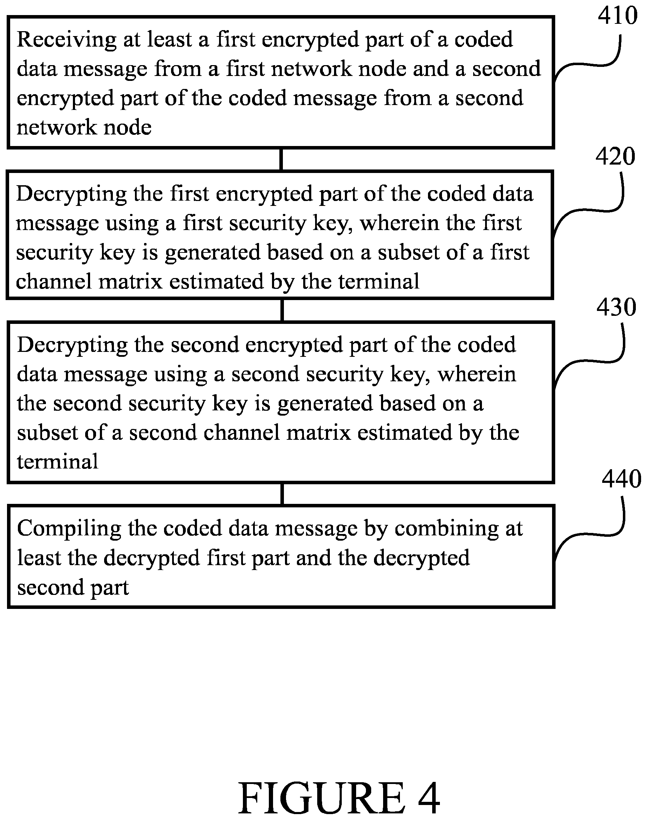

FIGURE 4 is a flow graph of a first method in accordance with at least some embodiments of the present invention. The phases of the illustrated first method may be performed by UE 110 or a terminal in general, or by a control device configured to control the functioning thereof, possibly when installed therein.

The first method may comprise, at step 410, receiving at least a first encrypted part of a coded data message from a first network node and a second encrypted part of the coded data message from a second network node. The first method may also comprise, at step 420, decrypting he first encrypted part of the coded data message using a first security key, wherein the first security key is generated based on a subset of a first channel matrix estimated by the terminal. The first method may also comprise, at step 430, decrypting the second encrypted part of the coded data message using a second security key, wherein the second security key is generated based on a subset of a second channel matrix estimated by the terminal. In addition, the first method may comprise, at step 440, compiling the coded data message by combining at least the decrypted first part and the decrypted second part.

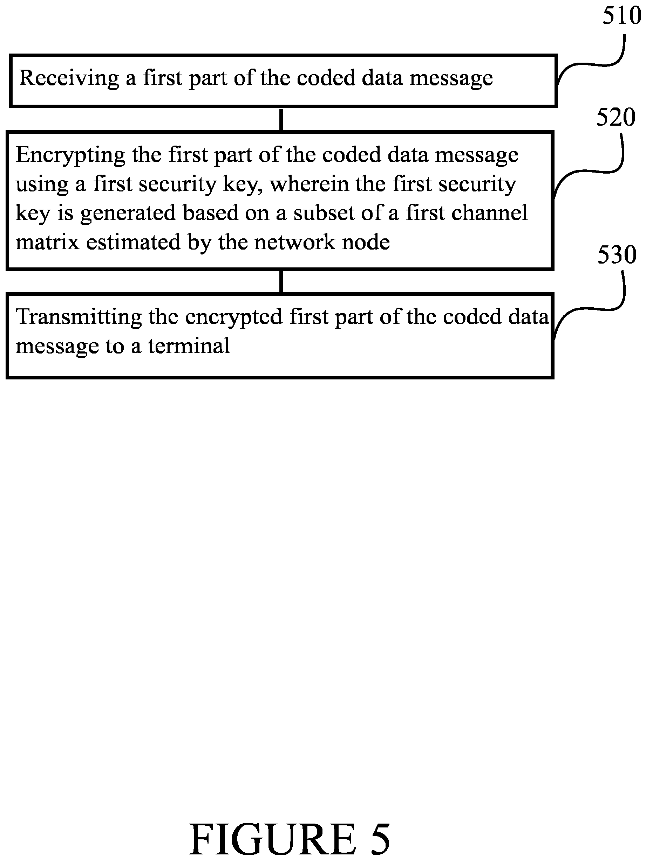

FIGURE 5 is a flow graph of a second method in accordance with at least some embodiments of the present invention. The phases of the illustrated second method may be performed by BS 140 or a network node in general, or by a control device configured to control the functioning thereof, possibly when installed therein.

The second method may comprise, at step 510, receiving a first part of a coded data message. The method may also comprise, at step 520, encrypting the first part of the coded data message using a first security key, wherein the first security key is generated based on a subset of a first channel matrix estimated by the network node. In addition, the method may comprise, at step 530, transmitting the encrypted first part of the coded data message to a terminal.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

In an exemplary embodiment, an apparatus, such as, for example, a terminal or a network node, may comprise means for carrying out the embodiments described above and any combination thereof.

In an exemplary embodiment, a computer program may be configured to cause a method in accordance with the embodiments described above and any combination thereof. In an exemplary embodiment, a computer program product, embodied on a non-transitory computer readable medium, may be configured to control a processor to perform a process comprising the embodiments described above and any combination thereof.

In an exemplary embodiment, an apparatus, such as, for example, a terminal or a network node, may comprise at least one processor, and at least one memory including computer program code, wherein the at least one memory and the computer program code are configured to, with the at least one processor, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

INDUSTRIAL APPLICABILITY

At least some embodiments of the present invention find industrial application in communication networks, wherein secure transmission over air interface is required.

ACRONYMS LIST

| | |
|---|---|
| 3GPP | 3rd Generation Partnership Project |
| ACK | Acknowledgement |
| BS | Base Station |
| CSI | Channel State Information |
| CTR | Counter |
| DoS | Denial-of Service |
| EPS-AKA | Evolved Packet System Authentication and Key Agreement |
| GCM | Galois counter mode |
| GSM | Global System for Mobile communication |
| HTTPS | Hypertext Transfer Protocol Secure |
| IMSI | International Mobile Subscriber Identity |
| IoT | Internet of Things |
| IPSec | Internet Protocol Security |
| LDPC | Low Density Parity Check |
| LTE | Long-Term Evolution |
| MIMO | Multiple-Input Multiple-Output |

EP 3 629 515 B1

NACK        Non-acknowledgement
NFC         Near-Field Communication
PLS         Physical Layer Security
NR          New Radio
RAT         Radio Access Technology
SIM         Subscriber Identity Module
UE          User Equipment
UI          User Interface
WCDMA       Wideband Code Division Multiple Access
WiMAX       Worldwide Interoperability for Microwave Access
WLAN        Wireless Local Area Network

REFERENCE SIGNS LIST

| 110, 120, 150 | Terminal, e.g., user equipment |
|---|---|
| 130 | Network element, e.g., base station |
| 115, 135 | Interfaces |
| 140 | Core network or central controller |
| 230, 260, 280, 290 | Processing steps in FIGURE 2 |
| 210, 220, 240a, 240n, 250a, 250n, 270a, 270n, 280a, 280n | Signaling steps in FIGURE 2 |
| 300-370 | Structure of the apparatus of FIGURE 3 |
| 410-440 | Phases of the method of FIGURE 4 |
| 510-530 | Phases of the method of FIGURE 5 |

**Claims**

1. A method for a terminal (110), comprising:

   - receiving, by the terminal (110), at least a first encrypted part of a coded data message from a first network node (130a) via a first channel and a second encrypted part of the coded data message from a second network node (130n) via a second channel;
   - decrypting, by the terminal (110), the first encrypted part of the coded data message using a first security key, wherein the first security key is generated based on a subset of a channel measurement matrix of the first channel estimated by the terminal (110);
   - decrypting, by the terminal (110), the second encrypted part of the coded data message using a second security key, wherein the second security key is generated based on a subset of a channel measurement matrix of the second channel estimated by the terminal (110); and
   - compiling, by the terminal (110), the coded data message by combining at least the decrypted first part and the decrypted second part.

2. A method according to claim 1, further comprising:

   - decoding the compiled coded data message.

3. A method according to claim 1 or claim 2, further comprising:

   - receiving *N* encrypted parts of the coded data message from *N* network nodes (130a... 130n);
   - decrypting the *N* encrypted parts of the coded data message using *N* security keys, wherein each of the *N* security keys is generated based on a channel measurement matrix between one network node of the *N* network nodes (130a... 130n) and the terminal (110);
   - compiling the coded data message by combining the N decrypted parts.

4. A method according to any of the preceding claims, wherein an entry in a subset of a channel measurement matrix comprises a number of most significant bits of an entry of the channel measurement matrix

5. A method according to any of the preceding claims, wherein a subset of a channel measurement matrix comprises information related to a number of antenna pairs and the number of antenna pairs in the subset of the channel measurement matrix is less than a number of antenna pairs in the channel measurement matrix.

6. A method according to any of the preceding claims, further comprising:

    - estimating the first channel measurement matrix based on a message from the first network node (130a) and generating the first security key based on the subset of the first channel measurement matrix; and
    - estimating the second channel measurement matrix based on a message from the second network node (130n) and generating the second security key based on the subset of the second channel measurement matrix.

7. A method according to any of the preceding claims, further comprising:

    - splitting a coded uplink data message to at least a first and a second part;
    - encrypting the first part using the first security key and the second part using the second security key; and
    - transmitting at least the encrypted first part to the first network node (130a) and the encrypted second part to the second network node (130n).

8. A method according to any of the preceding claims, further comprising:

    - transmitting a test message for testing the first security key; and
    - receiving an acknowledgement message regarding the test message.

9. A method, comprising:

    - receiving, by a first network node (130a) a first part of a coded data message;
    - encrypting, by the first network node (130a), the first part of the coded data message using a first security key, wherein the first security key is generated based on a subset of a channel measurement matrix of a first channel estimated by the first network node (130a);
    - transmitting, by the first network node (130a), the encrypted first part of the coded data message to a terminal;
    - receiving, by the terminal (110), at least the first encrypted part of the coded data message from the first network node (130a) via the first channel and a second encrypted part of the coded data message from a second network node (130n) via a second channel;
    - decrypting, by the terminal (110), the first encrypted part of the coded data message using a first security key, wherein the first security key is generated based on a subset of a channel measurement matrix of the first channel estimated by the terminal (110);
    - decrypting, by the terminal (110), the second encrypted part of the coded data message using a second security key, wherein the second security key is generated based on a subset of a channel measurement matrix of the second channel estimated by the terminal (110); and
    - compiling, by the terminal (110), the coded data message by combining at least the decrypted first part and the decrypted second part.

10. A method according to claim 9, wherein an entry in a subset of a channel measurement matrix comprises a number of most significant bits of an entry of the channel measurement matrix and/or a subset of a channel measurement matrix comprises information related to a number of antenna pairs and the number of antenna pairs in the subset of the channel measurement matrix is less than a number of antenna pairs in the channel measurement matrix.

11. An apparatus (300) comprising:

    - means for receiving at least a first encrypted part of a coded data message from a first network node (130a) via a first channel and a second encrypted part of the coded data message from a second network node (130n) via a second channel;
    - means for decrypting the first encrypted part of the coded data message using a first security key, wherein the first security key is generated based on a subset of a channel measurement matrix of the first channel estimated by the apparatus (300);

- means for decrypting the second encrypted part of the coded data message using a second security key, wherein the second security key is generated based on a subset of a channel measurement matrix of the second channel estimated by the apparatus (300); and
- means for compiling the coded data message by combining at least the decrypted first part and the decrypted second part.

**12.** An apparatus (300) according to claim 11, further comprising means for performing a method according to any of claims 2 - 8.

**13.** A system comprising:

- a first network node (130a) comprising:

  ◦ means for receiving a first part of a coded data message;
  ◦ means for encrypting the first part of the coded data message using a first security key, wherein the first security key is generated based on a subset of a channel measurement matrix of a first channel estimated by the network node; and
  ◦ means for transmitting the encrypted first part of the coded data message to a terminal; and

- a terminal (110) comprising:

  ◦ means for receiving at least the first encrypted part of the coded data message from the first network node (130a) via the first channel and a second encrypted part of the coded data message from a second network node (130n) via a second channel;
  ◦ means for decrypting the first encrypted part of the coded data message using a first security key, wherein the first security key is generated based on a subset of a channel measurement matrix of the first channel estimated by the apparatus (300);
  ◦ means for decrypting the second encrypted part of the coded data message using a second security key, wherein the second security key is generated based on a subset of a channel measurement matrix of the second channel estimated by the apparatus (300); and
  ◦ means for compiling the coded data message by combining at least the decrypted first part and the decrypted second part.

**14.** A system according to claim 13, wherein an entry in a subset of a channel measurement matrix comprises a number of most significant bits of an entry of the channel measurement matrix and/or a subset of a channel measurement matrix comprises information related to a number of antenna pairs and the number of antenna pairs in the subset of the channel measurement matrix is less than a number of antenna pairs in the channel measurement matrix.

**15.** A computer program configured to perform a method according to any of claims 1 - 8.

**Patentansprüche**

**1.** Verfahren für ein Endgerät (110), das Folgendes umfasst:

- Empfangen mindestens eines ersten verschlüsselten Teils einer codierten Datenachricht via einen ersten Kanal von einem ersten Netzwerkknoten (130a) und eines zweiten verschlüsselten Teils der codierten Datennachricht via einen zweiten Kanal von einem zweiten Netzwerkknoten (130n) durch das Endgerät (110);
- Entschlüsseln des ersten verschlüsselten Teils der codierten Datennachricht durch das Endgerät (110) unter Verwendung eines ersten Sicherheitsschlüssels, wobei der erste Sicherheitsschlüssel auf Basis eines Untersatzes einer Kanalmessmatrix des ersten Kanals, die vom Endgerät (110) geschätzt wird, erzeugt wird;
- Entschlüsseln des zweiten verschlüsselten Teils der codierten Datennachricht durch das Endgerät (110) unter Verwendung eines zweiten Sicherheitsschlüssels, wobei der zweite Sicherheitsschlüssel auf Basis eines Untersatzes einer Kanalmessmatrix des zweiten Kanals, die vom Endgerät (110) geschätzt wird, erzeugt wird; und
- Kompilieren der codierten Datennachricht durch Kombinieren mindestens des entschlüsselten ersten Teils und des entschlüsselten zweiten Teils durch das Endgerät (110).

**2.** Verfahren nach Anspruch 1, das ferner Folgendes umfasst:

- Decodieren der kompilierten codierten Datennachricht.

3. Verfahren nach Anspruch 1 oder Anspruch 2, das ferner Folgendes umfasst:

- Empfangen von *N* verschlüsselten Teilen der codierten Datennachricht von *N* Netzwerkknoten (130a...130n);
- Entschlüsseln der *N* verschlüsselten Teile der codierten Datennachricht unter Verwendung von *N* Sicherheitsschlüsseln, wobei jeder der *N* Sicherheitsschlüssel auf Basis einer Kanalmessmatrix zwischen einem Netzwerkknoten der *N* Netzwerkknoten (130a...130n) und dem Endgerät (110) erzeugt wird;
- Kompilieren der codierten Datennachricht durch Kombinieren der *N* entschlüsselten Teile.

4. Verfahren nach einem der vorhergehenden Ansprüche, wobei ein Eintrag in einem Untersatz einer Kanalmessmatrix eine Anzahl von höchstwertigen Bits eines Eintrags der Kanalmessmatrix umfasst.

5. Verfahren nach einem der vorhergehenden Ansprüche, wobei ein Untersatz einer Kanalmessmatrix Informationen umfasst, die eine Anzahl von Antennenpaaren betreffen, und die Anzahl von Antennenpaaren im Untersatz der Kanalmessmatrix kleiner ist als eine Anzahl von Antennenpaaren in der Kanalmessmatrix.

6. Verfahren nach einem der vorhergehenden Ansprüche, das ferner Folgendes umfasst:

- Schätzen der ersten Kanalmessmatrix auf Basis einer Nachricht vom ersten Netzwerkknoten (130a) und Erzeugen des ersten Sicherheitsschlüssels auf Basis des Untersatzes der ersten Kanalmessmatrix; und
- Schätzen der zweiten Kanalmessmatrix auf Basis einer Nachricht vom zweiten Netzwerkknoten (130n) und Erzeugen des zweiten Sicherheitsschlüssels auf Basis des Untersatzes der zweiten Kanalmessmatrix.

7. Verfahren nach einem der vorhergehenden Ansprüche, das ferner Folgendes umfasst:

- Teilen einer codierten Uplinkdatennachricht in mindestens einen ersten und einen zweiten Teil;
- Verschlüsseln des ersten Teils unter Verwendung des ersten Sicherheitsschlüssels und des zweiten Teils unter Verwendung des zweiten Sicherheitsschlüssels; und
- Übertragen mindestens des verschlüsselten ersten Teils zum ersten Netzwerkknoten (130a) und des verschlüsselten zweiten Teils zum zweiten Netzwerkknoten (130n).

8. Verfahren nach einem der vorhergehenden Ansprüche, das ferner Folgendes umfasst:

- Übertragen einer Testnachricht zum Testen des ersten Sicherheitsschlüssels; und
- Empfangen einer Bestätigungsnachricht mit Bezug auf die Testnachricht.

9. Verfahren, das Folgendes umfasst:

- Empfangen eines ersten Teils einer codierten Datennachricht durch einen ersten Netzwerkknoten (130a);
- Verschlüsseln des ersten Teils der codierten Datennachricht durch den ersten Netzwerkknoten (130a) unter Verwendung eines ersten Sicherheitsschlüssels, wobei der erste Sicherheitsschlüssel auf Basis eines Untersatzes einer Kanalmessmatrix eines ersten Kanals, die vom ersten Netzwerkknoten (130a) geschätzt wird, erzeugt wird;
- Übertragen des verschlüsselten ersten Teils der codierten Datennachricht durch den ersten Netzwerkknoten (130a) zu einem Endgerät;
- Empfangen mindestens des ersten verschlüsselten Teils der codierten Datennachricht via den ersten Kanal vom ersten Netzwerkknoten (130a) und eines zweiten verschlüsselten Teils der codierten Datennachricht via einen zweiten Kanal von einem zweiten Netzwerkknoten (130n) durch das Endgerät (110);
- Entschlüsseln des ersten verschlüsselten Teils der codierten Datennachricht durch das Endgerät (110) unter Verwendung eines ersten Sicherheitsschlüssels, wobei der erste Sicherheitsschlüssel auf Basis eines Untersatzes einer Kanalmessmatrix des ersten Kanals, die vom Endgerät (110) geschätzt wird, erzeugt wird;
- Entschlüsseln des zweiten verschlüsselten Teils der codierten Datennachricht durch das Endgerät (110) unter Verwendung eines zweiten Sicherheitsschlüssels, wobei der zweite Sicherheitsschlüssel auf Basis eines Untersatzes einer Kanalmessmatrix des zweiten Kanals, die vom Endgerät (110) geschätzt wird, erzeugt wird; und
- Kompilieren der codierten Datennachricht durch Kombinieren mindestens des entschlüsselten ersten Teils und des entschlüsselten zweiten Teils durch das Endgerät (110).

**10.** Verfahren nach Anspruch 9, wobei ein Eintrag in einem Untersatz einer Kanalmessmatrix eine Anzahl von höchstwertigen Bits eines Eintrags der Kanalmessmatrix umfasst und/oder ein Untersatz einer Kanalmessmatrix Informationen umfasst, die eine Anzahl von Antennenpaaren betreffen, und die Anzahl von Antennenpaaren im Untersatz der Kanalmessmatrix kleiner ist als eine Anzahl von Antennenpaaren in der Kanalmessmatrix.

**11.** Vorrichtung (300), die Folgendes umfasst:

- Mittel zum Empfangen mindestens eines ersten verschlüsselten Teils einer codierten Datennachricht via einen ersten Kanal von einem ersten Netzwerkknoten (130a) und eines zweiten verschlüsselten Teils der codierten Datennachricht via einen zweiten Kanal von einem zweiten Netzwerkknoten (130n);
- Mittel zum Entschlüsseln des ersten verschlüsselten Teils der codierten Datennachricht unter Verwendung eines ersten Sicherheitsschlüssels, wobei der erste Sicherheitsschlüssel auf Basis eines Untersatzes einer Kanalmessmatrix des ersten Kanals, die von einer Vorrichtung (300) geschätzt wird, erzeugt wird;
- Mittel zum Entschlüsseln des zweiten verschlüsselten Teils der codierten Datennachricht unter Verwendung eines zweiten Sicherheitsschlüssels, wobei der zweite Sicherheitsschlüssel auf Basis eines Untersatzes einer Kanalmessmatrix des zweiten Kanals, die von der Vorrichtung (300) geschätzt wird, erzeugt wird; und
- Mittel zum Kompilieren der codierten Datennachricht durch Kombinieren mindestens des entschlüsselten ersten Teils und des entschlüsselten zweiten Teils.

**12.** Vorrichtung (300) nach Anspruch 11, die ferner Mittel zum Durchführen eines Verfahrens nach einem der Ansprüche 2-8 umfasst.

**13.** System, das Folgendes umfasst:

- einen ersten Netzwerkknoten (130a), der Folgendes umfasst:

  ◦ Mittel zum Empfangen eines ersten Teils einer codierten Datennachricht;
  ◦ Mittel zum Verschlüsseln des ersten Teils der codierten Datennachricht unter Verwendung eines ersten Sicherheitsschlüssels, wobei der erste Sicherheitsschlüssel auf Basis eines Untersatzes einer Kanalmessmatrix eines ersten Kanals, die vom Netzwerkknoten geschätzt wird, erzeugt wird; und
  ◦ Mittel zum Übertragen des verschlüsselten ersten Teils der codierten Datennachricht zu einem Endgerät; und

- Endgerät (110), das Folgendes umfasst:

  ◦ Mittel zum Empfangen mindestens des ersten verschlüsselten Teils der codierten Datennachricht via den ersten Kanal vom ersten Netzwerkknoten (130a) und eines zweiten verschlüsselten Teils der codierten Datennachricht via einen zweiten Kanal von einem zweiten Netzwerkknoten (130n);
  ◦ Mittel zum Entschlüsseln des ersten verschlüsselten Teils der codierten Datennachricht unter Verwendung eines ersten Sicherheitsschlüssels, wobei der erste Sicherheitsschlüssel auf Basis eines Untersatzes einer Kanalmessmatrix des ersten Kanals, die von der Vorrichtung (300) geschätzt wird, erzeugt wird;
  ◦ Mittel zum Entschlüsseln des zweiten verschlüsselten Teils der codierten Datennachricht unter Verwendung eines zweiten Sicherheitsschlüssels, wobei der zweite Sicherheitsschlüssel auf Basis eines Untersatzes einer Kanalmessmatrix des zweiten Kanals, die von der Vorrichtung (300) geschätzt wird, erzeugt wird; und
  ◦ Mittel zum Kompilieren der codierten Datennachricht durch Kombinieren mindestens des entschlüsselten ersten Teils und des entschlüsselten zweiten Teils.

**14.** System nach Anspruch 13, wobei ein Eintrag in einem Untersatz einer Kanalmessmatrix eine Anzahl von höchstwertigen Bits eines Eintrags der Kanalmessmatrix umfasst und/oder ein Untersatz einer Kanalmessmatrix Informationen umfasst, die eine Anzahl von Antennenpaaren betreffen, und die Anzahl von Antennenpaaren im Untersatz der Kanalmessmatrix kleiner ist als eine Anzahl von Antennenpaaren in der Kanalmessmatrix.

**15.** Computerprogramm, das dazu ausgelegt, ein Verfahren nach einem der Ansprüche 1-8 durchzuführen.

EP 3 629 515 B1

**Revendications**

1. Procédé pour un terminal (110), comprenant :

   - la réception, par le terminal (110), d'au moins une première partie chiffrée d'un message de données codées d'un premier nœud de réseau (130a) par le biais d'un premier canal et d'une deuxième partie chiffrée du message de données codées d'un deuxième nœud de réseau (130n) par le biais d'un deuxième canal ;
   - le déchiffrement, par le terminal (110), de la première partie chiffrée du message de données codées au moyen d'une première clé de sécurité, dans lequel la première clé de sécurité est générée sur la base d'un sous-ensemble d'une matrice de mesure de canal du premier canal estimée par le terminal (110) ;
   - le déchiffrement, par le terminal (110), de la deuxième partie chiffrée du message de données codées au moyen d'une deuxième clé de sécurité, dans lequel la deuxième clé de sécurité est générée sur la base d'un sous-ensemble d'une matrice de mesure de canal du deuxième canal estimée par le terminal (110) ; et
   - la compilation, par le terminal (110), du message de données codées par combinaison d'au moins la première partie déchiffrée et la deuxième partie déchiffrée.

2. Procédé selon la revendication 1, comprenant en outre :

   - le décodage du message de données codées compilé.

3. Procédé selon la revendication 1 ou la revendication 2, comprenant en outre :

   - la réception de N parties chiffrées du message de données codées de N nœuds de réseau (130a...130n) ;
   - le déchiffrement des N parties chiffrées du message de données codées au moyen de N clés de sécurité, dans lequel chacune des N clés de sécurité est générée sur la base d'une matrice de mesure de canal entre un nœud de réseau des N nœuds de réseau (130a ... 130n) et le terminal (110) ;
   - la compilation du message de données codées par combinaison des N parties déchiffrées.

4. Procédé selon l'une quelconque des revendications précédentes, dans lequel une entrée dans un sous-ensemble d'une matrice de mesure de canal comprend un nombre de bits les plus significatifs d'une entrée de la matrice de mesure de canal.

5. Procédé selon l'une quelconque des revendications précédentes, dans lequel un sous-ensemble d'une matrice de mesure de canal comprend des informations liées à un nombre de paires d'antennes et le nombre de paires d'antennes dans le sous-ensemble de la matrice de mesure de canal est inférieur à un nombre de paires d'antennes dans la matrice de mesure de canal.

6. Procédé selon l'une quelconque des revendications précédentes, comprenant en outre :

   - l'estimation de la première matrice de mesure de canal sur la base d'un message provenant du premier nœud de réseau (130a) et la génération de la première clé de sécurité sur la base du sous-ensemble de la première matrice de mesure de canal ; et
   - l'estimation de la deuxième matrice de mesure de canal sur la base d'un message provenant du deuxième nœud de réseau (130n) et la génération de la deuxième clé de sécurité sur la base du sous-ensemble de la deuxième matrice de mesure de canal.

7. Procédé selon l'une quelconque des revendications précédentes, comprenant en outre :

   - la division d'un messages de données de liaison montante codées en au moins une première et une deuxième partie ;
   - le chiffrement de la première partie au moyen de la première clé de sécurité et de la deuxième partie au moyen de la deuxième clé de sécurité ; et
   - la transmission d'au moins la première partie chiffrée au premier nœud de réseau (130a) et de la deuxième partie chiffrée au deuxième nœud de réseau (130n).

8. Procédé selon l'une quelconque des revendications précédentes, comprenant en outre :

   - la transmission d'un message d'essai pour l'essai de la première clé de sécurité ; et

- la réception d'un message d'accusé de réception concernant le message d'essai.

9. Procédé, comprenant :

- la réception, par un premier nœud de réseau (130a), d'une première partie d'un message de données codées ;
- le chiffrement, par le premier nœud de réseau (130a), de la première partie du message de données codées au moyen d'une première clé de sécurité, dans lequel la première clé de sécurité est générée sur la base d'un sous-ensemble d'une matrice de mesure de canal d'un premier canal estimée par le premier nœud de réseau (130a) ;
- la transmission, par le premier nœud de réseau (130a), de la première partie chiffrée du message de données codées à un terminal ;
- la réception, par le terminal (110), d'au moins la première partie chiffrée du message de données codées du premier nœud de réseau (130a) par le biais du premier canal et d'une deuxième partie chiffrée du message de données codées d'un deuxième nœud de réseau (130n) par le biais d'un deuxième canal ;
- le déchiffrement, par le terminal (110), de la première partie chiffrée du message de données codées au moyen d'une première clé de sécurité, dans lequel la première clé de sécurité est générée sur la base d'un sous-ensemble d'une matrice de mesure de canal du premier canal estimée par le terminal (110) ;
- le déchiffrement, par le terminal (110), de la deuxième partie chiffrée du message de données codées au moyen d'une deuxième clé de sécurité, dans lequel la deuxième clé de sécurité est générée sur la base d'un sous-ensemble d'une matrice de mesure de canal du deuxième canal estimée par le terminal (110) ; et
- la compilation, par le terminal (110), du message de données codées par combinaison d'au moins la première partie déchiffrée et de la deuxième partie déchiffrée.

10. Procédé selon la revendication 9, dans lequel une entrée dans un sous-ensemble d'une matrice de mesure de canal comprend un nombre de bits les plus significatifs d'une entrée de la matrice de mesure de canal et/ou un sous-ensemble d'une matrice de mesure de canal comprend des informations liées à un nombre de paires d'antennes et le nombre de paires d'antennes dans le sous-ensemble de la matrice de mesure de canal est inférieur à un nombre de paires d'antennes dans la matrice de mesure de canal.

11. Appareil (300) comprenant :

- des moyens pour recevoir au moins une première partie chiffrée d'un message de données codées d'un premier nœud de réseau (130a) par le biais d'un premier canal et une deuxième partie chiffrée du message de données codées d'un deuxième nœud de réseau (130n) par le biais d'un deuxième canal ;
- des moyens pour déchiffrer la première partie chiffrée du message de données codées au moyen d'une première clé de sécurité, dans lequel la première clé de sécurité est générée sur la base d'un sous-ensemble d'une matrice de mesure de canal du premier canal estimée par l'appareil (300) ;
- des moyens pour déchiffrer la deuxième partie chiffrée du message de données codées au moyen d'une deuxième clé de sécurité, dans lequel la deuxième clé de sécurité est générée sur la base d'un sous-ensemble d'une matrice de mesure de canal du deuxième canal estimée par l'appareil (300) ; et
- des moyens pour compiler le message de données codées par combinaison d'au moins la première partie déchiffrée et de la deuxième partie déchiffrée.

12. Appareil (300) selon la revendication 11, comprenant en outre des moyens pour mettre en œuvre un procédé selon l'une quelconque des revendications 2 à 8.

13. Système comprenant :

- un premier nœud de réseau (130a) comprenant :

  ◦ des moyens pour recevoir une première partie d'un message de données codées ;
  ◦ des moyens pour chiffrer la première partie du message de données codées au moyen d'une première clé de sécurité, dans lequel la première clé de sécurité est générée sur la base d'un sous-ensemble d'une matrice de mesure de canal d'un premier canal estimée par le nœud de réseau ; et
  ◦ des moyens pour transmettre la première partie chiffrée du message de données codées à un terminal ; et

- un terminal (110) comprenant :

des moyens pour recevoir au moins la première partie chiffrée du message de données codées du premier nœud de réseau (130a) par le biais du premier canal et une deuxième partie chiffrée du message de données codées d'un deuxième nœud de réseau (130n) par le biais d'un deuxième canal ;

des moyens pour déchiffrer la première partie chiffrée du message de données codées au moyen d'une première clé de sécurité, dans lequel la première clé de sécurité est générée sur la base d'un sous-ensemble d'une matrice de mesure de canal du premier canal estimée par l'appareil (300) ;

des moyens pour déchiffrer la deuxième partie chiffrée du message de données codées au moyen d'une deuxième clé de sécurité, dans lequel la deuxième clé de sécurité est générée sur la base d'un sous-ensemble d'une matrice de mesure de canal du deuxième canal estimée par l'appareil (300) ; et

des moyens pour compiler le message de données codées par combinaison d'au moins la première partie déchiffrée et de la deuxième partie déchiffrée.

14. Système selon la revendication 13, dans lequel une entrée dans un sous-ensemble d'une matrice de mesure de canal comprend un nombre de bits les plus significatifs d'une entrée de la matrice de mesure de canal et/ou un sous-ensemble d'une matrice de mesure de canal comprend des informations liées à un nombre de paires d'antennes et le nombre de paires d'antennes dans le sous-ensemble de la matrice de mesure de canal est inférieur à un nombre de paires d'antennes dans la matrice de mesure de canal.

15. Produit-programme d'ordinateur configuré pour mettre en œuvre un procédé selon l'une quelconque des revendications 1 à 8.

FIGURE 1

# FIGURE 2

FIGURE 3

410

Receiving at least a first encrypted part of a coded data message from a first network node and a second encrypted part of the coded message from a second network node

420

Decrypting the first encrypted part of the coded data message using a first security key, wherein the first security key is generated based on a subset of a first channel matrix estimated by the terminal

430

Decrypting the second encrypted part of the coded data message using a second security key, wherein the second security key is generated based on a subset of a second channel matrix estimated by the terminal

440

Compiling the coded data message by combining at least the decrypted first part and the decrypted second part

# FIGURE 4

510

Receiving a first part of the coded data message

520

Encrypting the first part of the coded data message using a first security key, wherein the first security key is generated based on a subset of a first channel matrix estimated by the network node

530

Transmitting the encrypted first part of the coded data message to a terminal

# FIGURE 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140219449 A1

**Non-patent literature cited in the description**

- **LIU YILIANG et al.** Physical Layer Security for Next Generation Wireless Networks: Theories, Technologies, and Challenges. *IEEE COMMUNICATIONS SURVEYS & TUTORIALS,* 10 August 2016, vol. 19 (1), 347-376